# EUROPEAN PATENT SPECIFICATION

(11) **EP 0 682 790 B1**
(45) Date of publication and mention of the grant of the patent: **16.01.2002**
(21) Application number: 94931948.7
(22) Date of filing: 21.10.1994
(51) Int. Cl.: G06F 11/10, H04L 12/56, H04Q 11/04, H04L 7/04, H04L 1/00

(54) **METHOD AND SYSTEM FOR SYNCHRONIZING ENCODERS AND DECODERS IN COMMUNICATION NETWORKS WHEN ERRORS ARE DETECTED**
VERFAHREN UND SYSTEM ZUR SYNCHRONISIERUNG VON KODIERERN UND DEKODIERERN IN KOMMUNIKATIONSNETZWERKEN, WENN FEHLER DETEKTIERT WERDEN
PROCEDE ET SYSTEME DE SYNCHRONISATION DE CODEURS ET DECODEURS DE RESEAUX DE TELECOMMUNICATIONS EN CAS DE DETECTION D'ERREURS

(30) Priority: 22.11.1993 US 156857
(43) Date of publication of application: 22.11.1995
(73) Proprietor: MOTOROLA, INC., Schaumburg, IL 60196 (US)
(72) Inventor: DESNOYERS, Peter, Joseph, Cambridge, MA 02139 (US); QURESHI, Shahid, Ul, Hao, Natcik, MA 01760 (US)
(74) Representative: Dunlop, Hugh Christopher
(86) International application number: US9412033
(87) International publication number: WO9514971

(56) References cited:
- EP-A- 0 448 074
- EP-A- 0 503 667
- US-A- 4 577 313
- US-A- 4 779 275
- US-A- 4 893 339
- US-A- 5 130 993
- US-A- 5 131 012
- US-A- 5 168 497
- US-A- 5 230 002
- DODDS D E ET AL: "ATM FRAMING ACQUISITION" COMMUNICATIONS, COMPUTERS AND POWER IN THE MODERN ENVIRONMENT, SASKATOON, MAY 17 - 18, 1993, no. -, 17 May 1993, INSTITUTE OF ELECTRICAL AND ELECTRONICS ENGINEERS, pages 56-60, XP000380229

## Description

### Field of the Invention

This invention relates to communication systems and in particular to the synchronization of transmitted encoded data such as compressed data in communication networks.

### Background

Digital systems typically communicate using packet-switched digital communication networks. The networks generally include a plurality of nodes that may transmit, receive or forward data. Data to be transmitted is typically organized into units such as frames or cells. The units are sent from one node to another either directly or utilizing one or more intermediate nodes. The communication channel established between edge nodes in the network is generally termed a virtual circuit.

When data that is sent through the network is compressed before transmittal, transmission efficiency through the network is increased. Typically, an encoder at a source node may compress data, which is then transmitted and decompressed at a destination node. However, when error(s) occur during transmission, synchronization between the encoder and the decoder is lost. There is a need for efficient synchronization of transmittal of data through a network. US-A-5130993 discloses a technique that allows state-based encoding and decoding to be used on "unreliable" networks-networks in which the lower level entities, relative to the encoding and decoding units, do not guarantee proper sequencing or a full set of error-free packets. In order to recover from loss of synchronization in such networks, US-A-5130993 discloses the generation of error information that spans more than the unit of information being transmitted. This error information, along with the information to be transmitted, is encoded, then transmitted, then decoded. After decoding all the decoded information is analyzed to detect errors.

### Summary of Invention

According to the invention as claimed in claim 1 there is provided a method of communicating information from a source to a destination across a communication network, said method comprising the steps of encoding information into a sequence of units of encoded data; generating an error detection information unit that is indicative of the encoded data unit and at least one previous unit, combining the error detection information unit with a corresponding encoded data unit to form a transmittable unit; transmitting the transmittable unit across the network from the source to the destination, receiving a transmittable unit and stripping the error detection information unit therefrom; the method characterised by the steps of detecting errors in the error detection information unit to detect, before decoding, if the received transmittable unit is erroneous or received out of sequence; and if the detecting step detects that the received transmittable unit is erroneous or received out of sequence, re-synchronizing the encoding technique with the decoding technique.

A system for synchronizing an encoder of an encoder error synchronizer and a decoder of a decoder error synchronizer upon detection of error(s) in transmission of units of encoded data across a communication network, as claimed in claim 9, is also provided.

### Brief Descriptions of the Drawings

FIG. 1 is a block diagram of users groups connected to a communication network as is known in the art.

FIG. 2 is a flow chart of a first embodiment of steps in accordance with the method of the present invention.

FIG. 3 is a flow chart showing one embodiment of the step of synchronizing an encoder and a decoder when an error is detected (FIG. 2) with greater particularity.

FIG. 4 is a block diagram of a first embodiment of a system in accordance with the system of the present invention.

FIG. 5 is a flow chart of a second embodiment of steps in accordance with the method of the present invention.

### Detailed Description of a Preferred Embodiment

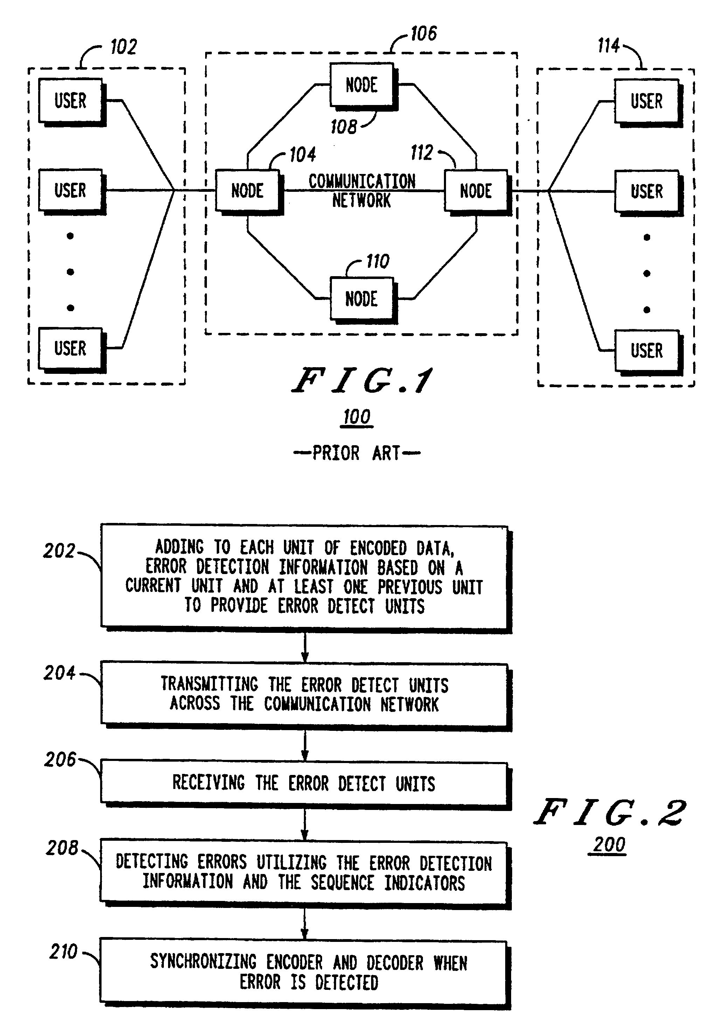

FIG. 1, numeral 100, is a block diagram of users groups connected to a communication network as is known in the art. Typically, a first user group (102) is operably coupled to a first node (104) of a communication network (106), that is in turn coupled to other nodes (108, 110), and to a receiving node (112) for a second user group (114). Data is exchanged between the first user group and the second user group by transmittal between the first node and the receiving node via connected nodes of the communication network.

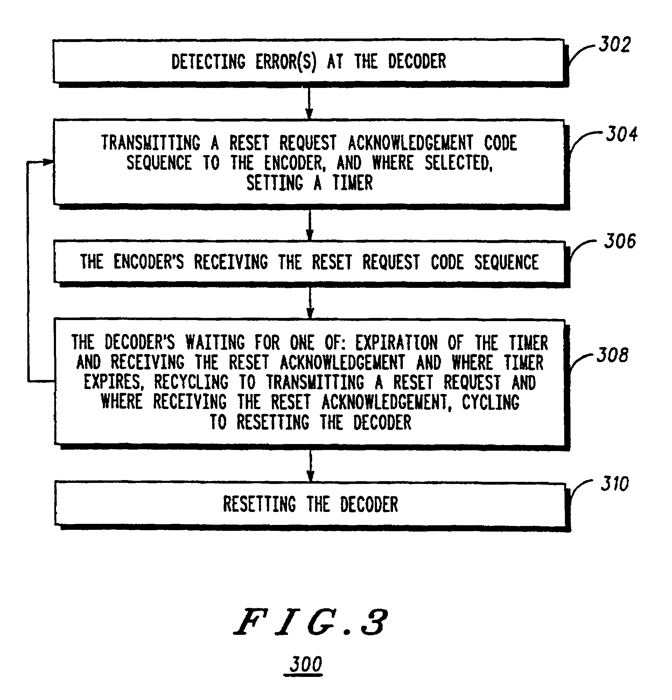

FIG. 2, numeral 200, is a flow chart of an embodiment of steps in accordance with the method of the present invention. The method synchronizes an encoder and decoder of a communication network upon detecting an error. The method includes, for units of encoded data, the steps of: 1) adding to each unit of encoded data, error detection information based on a current unit and at least one previous unit to provide error detect units (202); 2) transmitting said error detect units across the communication network (204); 3) receiving the error detect units (206); 4) detecting error(s) utilizing the error detection information (208), and 5) synchronizing the encoder and decoder upon detecting error(s) (210).

In one embodiment the units of encoded data are frames of asynchronous transfer mode (ATM) cells that are transmitted across an ATM communication network. For example, a unit may be selected to be a data unit in an JSDN adaptation layer such as B-ISDN ATM Adaptation Layer 5 (AAL5) of CCITT recommendation I.363.

Error detection information is generally a code sequence added to said unit of encoded data subsequent to encoding the data such as a cyclic redundancy code (CRC), a code sequence other than a CRC wherein the code sequence is calculated from the encoded data, a code sequence other than a CRC wherein the code sequence is based on a size of the unit of encoded data, or a code sequence other than a CRC wherein the code sequence is based on the number of said data units since a previous reset. Thus, where a code sequence is based on a size of the unit of encoded data, for example, a code sequence may be based on a sequence number or running byte-count.

When encoding and decoding are performed on a sequence of data frames, the states of the encoder and decoder are often maintained between processing of successive frames without resetting at the beginning of each frame. Therefore, synchronization must be maintained from frame-to-frame. For example, if the communication network drops an entire frame or mis-orders a sequence of frames, synchronization will be lost. Whereas typical CRCs are based entirely on only a single frame, they are only capable of detecting transmission errors which occur within that frame. They are insufficient for the purpose of detecting the type of error in which frames are lost entirely or mis-ordered. According to the technique of the present invention, for the purpose of detecting loss of synchronization, the error detection information must be based on the current encoded frame and on at least the previous encoded frame.

In one embodiment, the encoder responds to receipt of a reset request code sequence by resetting the encoder and generating a reset acknowledgement code sequence to the decoder. The decoder is reset when it receives the reset acknowledgment code sequence, thereby resynchronizing with the encoder. In this case, the decoder discards frames received after transmission of the reset request code sequence until the reset acknowledgement code sequence is received. In a second embodiment, it is unnecessary for the encoder to explicitly transmit a reset acknowledgement code sequence to the decoder. Instead, the decoder resets itself, including the decoder error detecting circuit at the beginning of each encoded frame until an encoded frame is received that passes error detection without an error. In this case, the decoder performs error detection, then discards frames received after transmission of the reset request code sequence until a frame passes error detection without an error. The first encoded frame that passes error detection in the decoder without an error is taken to be the first frame sent by the encoder following the reset of the encoder in response to the reset request code sequence; the encoder and the decoder are then said to be synchronized.

In one embodiment, each successive frame in the sequence of encoded frames is associated with the next value of a frame counter, called a sequence number. In another embodiment, each successive encoded data byte in the sequence of encoded bytes of encoded frames is associated with the next value of a byte counter, called a sequence number. The sequence number for a frame may be concatenated with the CRC for that frame to comprise the error detecting information for that frame. In another embodiment, the sequence number and the CRC are combined by adding them together to comprise the error detection information. In yet another embodiment, the error detection information is a CRC computed for the current frame, where unlike the common practice, the CRC is
not reset to a fixed initial value at the beginning of the current frame, but instead the CRC is initialized to the value computed from the previous frame. These and other embodiments of the error detection information are chosen to be simple enough to minimize the cost of implementation, small enough to minimize the cost of transmission over the network, and are sufficiently unique to the particular encoded frame sequence to provide an acceptably high probability of detecting bit-errors and lost or misordered frames.

The communication network includes a plurality of nodes arranged so that a plurality of paths exist among at least some nodes between which said method is practiced. Typically, at least one node may communicate with more than one node at a time. Generally, encoded data may be selected to be compressed data.

Synchronizing the encoder and decoder may be selected to further include: (1) upon detecting an error at decoder, transmitting a reset request code sequence over a reverse channel upon said detecting of error(s) to the encoder, and where the encoder transmits an acknowledgment code sequence over said communication network to acknowledge reception of said reset request code sequence, one of: a) where the acknowledgment code sequence is received, resetting the decoder, and b) where there is a failure of the acknowledgment code sequence to be received, the decoder transmitting a further reset request code sequence to the encoder, and alternatively, 2) where the decoder resets the timer upon a received unit successfully passing error detection.

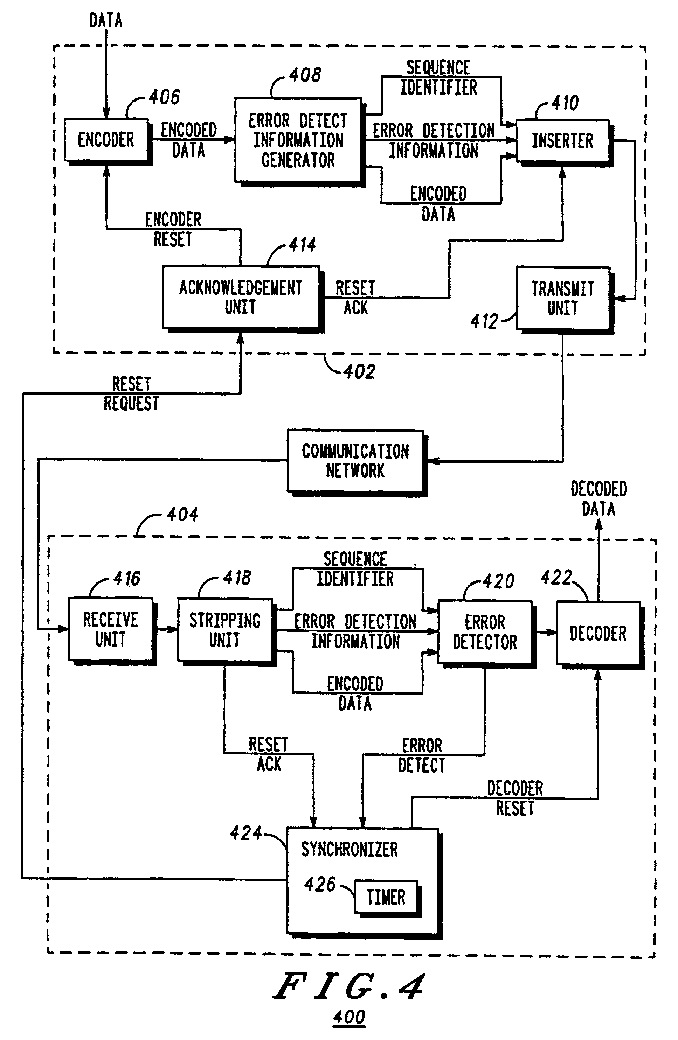

FIG. 3, numeral 300, is a flow chart showing one embodiment of the step of synchronizing an encoder and a decoder when an error is detected (FIG. 2) with greater particularity. Each step of synchronizing the encoder and decoder when an error is detected may include (1) detecting of error(s) at the decoder (302), (2) transmitting a reset request code sequence to the encoder, and where selected, setting a timer (304), (3) the encoder's receiving the reset request code sequence (306), (4) the encoder's resetting and generating a reset acknowledgment (308), (5) the decoder's waiting (310) for one of: expiration of the timer and receiving the reset acknowledgment, (6) upon expiration of the time without receiving the reset acknowledgment, recycling to sending the reset request and starting the timer (304), and, (7) upon receiving the reset acknowledgment, resetting the decoder (312). The reset request code sequence initiates resetting of the encoder and sending acknowledgment (ACK) of receipt of the request acknowledgment code sequence to the decoder. Where a timer has been set, the decoder determines whether the timer has expired without the decoder's receiving an acknowledgment from the encoder (306), and where the timer is expired without an acknowledgment, the step of transmitting the reset request to the encoder is repeated. When the timer is unexpired, the decoder determines whether a reset acknowledgment has been received from the encoder (308). Where there is a failure of the reset acknowledgment to be received, the method recycles to the step of transmitting the reset request to the encoder (304). Where the reset acknowledgment is received, the decoder is reset (310).

Thus, upon the decoder's detecting an error, the method may include the decoder's transmitting a reset request to the encoder, and where the reset request code sequence is received at the encoder, resetting the encoder. Here, each step of synchronizing the encoder and decoder further includes one of: (1) where the encoder transmits an acknowledgment code sequence over said communication network to acknowledge reception of said reset request code sequence and the acknowledgment code sequence is received, resetting the decoder such that the decoder is synchronized with the encoder, and (2) where the decoder is reset upon the decoding of each encoded data unit until a received unit successfully passed error detection. In addition, said step of synchronizing the encoder and decoder upon detecting error(s) may be selected to further include one of: (1) transmitting a second reset request code sequence over a reverse channel upon failure to receive said acknowledgment code sequence upon an expiration of a timer, and (2) transmitting a second reset request code sequence over said reverse channel upon failure of at least one received unit to successfully pass error detection upon an expiration of said timer. Thus, transmission of said second reset request may further include iteratively restarting said timer and transmitting subsequent reset request code sequences when said timer expires until the encoder and decoder are synchronized.

The communication network typically further includes a plurality of nodes arranged such that a plurality of paths exist between at least some nodes between which said method is practiced, and wherein at least one node may communicate with more than one node at a time using different encoding methods to communicate with at least two different nodes, and wherein the timer is shared by said nodes using different encoding methods.

Where said encoded data includes compressed data and said step of synchronizing the error detect units includes resynchronizing a transmitter at which insertion and transmitting are performed and a receiver at which receiving the error detect units, the method may include detecting error(s) utilizing the error detection information and the sequence indicators.

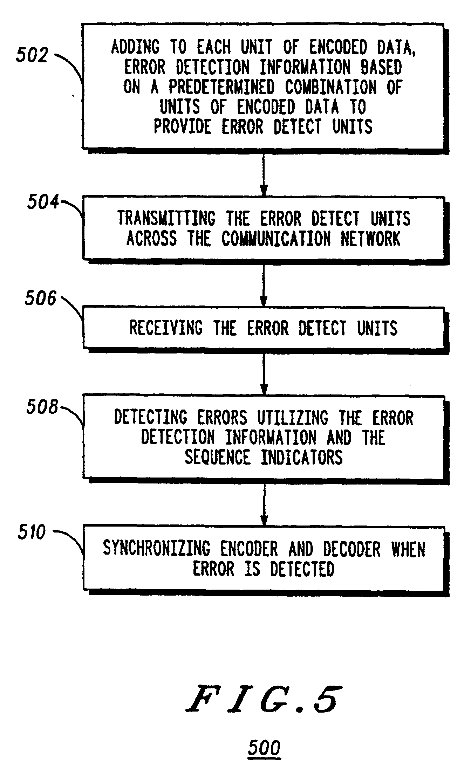

FIG. 4, numeral 400, is a block diagram of a first embodiment of a system in accordance with the system of the present invention. The system synchronizes an encoder of an encoder error synchronizer (402) and a decoder of a decoder error synchronizer (404) for encoded data transmitted across a communication network upon error detection. The encoder error synchronizer (402) is operably coupled to receive data and a reset request from the decoder error synchronizer (404), and is used for transmitting encoded data having error detection information and for, upon receiving the reset request, resetting the encoder. The decoder error synchronizer (404) is operably coupled across the communication network to receive the encoded data, detecting error(s), and, upon detecting error(s), to send a reset request to the encoder error synchronizer (402).

Typically, the encoder error synchronizer (402) includes: an encoder (406) that is operably coupled to receive data and to an acknowledgment unit and is used for encoding data and, upon receiving an encoder reset signal from an acknowledgment unit (414), resetting; an error detect information generator (408) that is operably coupled to the encoder (406) and is used for receiving the encoded data and for organizing the data into units of predetermined size(s) and providing sequence identifiers for said units of the encoded data, providing error detection information, and for providing the encoded data to an inserter (410); the inserter (410), that is operably coupled to receive the encoded data, the sequence indicators and error detection information and is used for adding to each unit of encoded data a sequence indicator and error detection information to provide error detect units; a transmission unit (412) that is operably coupled to the inserter (410) and is used for transmitting said error detect units across the communication network; and the acknowledgment unit (414) that is operably coupled to receive a reset request from the decoder error synchronizer (404) and is used for, upon receiving the reset request signal, sending a reset signal to the encoder (406) and a reset acknowledgment signal to the inserter (410).

The decoder error synchronizer (404) typically includes:
a receiving unit (416) that is operably coupled to the encoder error synchronizer (402), typically by means of a communication network, and is used for receiving the error detect units; a stripping unit (418) that is operably coupled to the receiving unit (416) and is used for providing the sequence identifiers, the error detection information and encoded data for each error detect unit and for transmitting a received reset acknowledgment to a synchronizer (424); an error detector (420) that is operably coupled to the stripping unit (418) and is used for detecting error(s) utilizing the error detection information and the sequence indicators and for providing an error detect signal to the synchronizer (424);
a decoder (422) that is operably coupled to the error detector (420) and to the synchronizer (424) and is used for decoding data and resetting upon receiving a reset signal from the synchronizer; and the synchronizer (424) that is operably coupled to the stripping unit (418) and to the error detector (420) for sending the reset signal to the decoder (422) and for sending a reset request to the encoder error synchronizer (402) upon receiving the error detect signal from the error detector (420).

The units of encoded data are typically frames of asynchronous transfer mode (ATM) cells and the communication network is an ATM network.

Error detection information is generally a code sequence added to said unit of encoded data subsequent to encoding the data such as a cyclic redundancy code (CRC), a code sequence other than a CRC wherein the code sequence is calculated from the encoded data, a code sequence other than a CRC wherein the code sequence is based on a size of the unit of encoded data, or a code sequence other than a CRC wherein the code sequence is based on the number of said data units since a previous reset. Thus, where a code sequence is based on a size of the unit of encoded data, for example, a code sequence may be based on a sequence number or running byte-count.

When encoding and decoding are performed on a sequence of data frames, the states of the encoder and decoder are often maintained between processing of successive frames without resetting at the beginning of each frame. Therefore, synchronization must be maintained from frame-to-frame. For example, if the communication network drops an entire frame or mis-orders a sequence of frames, synchronization will be lost. Whereas typical CRCs are based entirely on only a single frame, they are only capable of detecting transmission errors which occur within that frame. They are insufficient for the purpose of detecting the type of error in which frames are lost entirely or mis-ordered. According to the technique of the present invention, for the purpose of detecting loss of synchronization, the error detection information must be based on the current encoded frame and on at least the previous encoded frame.

In one embodiment, each successive frame in the sequence of encoded frames is associated with the next value of a frame counter, called a sequence number. In another embodiment, each successive encoded data byte in the sequence of encoded bytes of encoded frames is associated with the next value of a byte counter, called a sequence number. The sequence number for a frame may be concatenated with the CRC for that frame to comprise the error detecting information for that frame. In another embodiment, the sequence number and the CRC are combined by adding them together to comprise the error detection information. In yet another embodiment, the error detection information is a CRC computed for the current frame, where unlike the common practice, the CRC is not reset to a fixed initial value at the beginning of the current frame, but instead the CRC is initialized to the value computed from the previous frame. These and other embodiments of the error detection information are chosen to be simple enough to minimize the cost of implementation, small enough to minimize the cost of transmission over the network, and are sufficiently unique to the particular encoded frame sequence to provide an acceptably high probability of detecting bit-errors and lost or misordered frames.

The communication network generally includes a plurality of nodes so arranged that a plurality of paths exist between at least some nodes between which said system is practiced. At least one node may communicate with more than one node at a time.

The encoded data is generally compressed data.

The synchronizer may be selected to further include a timer (426) that is operably coupled to the error detector (420) and is used for starting timing upon said detecting of errors and for transmitting a second reset request code sequence over said reverse channel upon failure to receive said request acknowledgment code sequence upon an expiration of said timer.

The communication network may be selected to further include a plurality of nodes arranged such that a plurality of paths exist between at least some nodes between which said system is practiced, and wherein at least one node may communicate with more than one node at a time using different encoding methods to communicate with at least two different nodes, and wherein the timer is shared by said nodes using different encoding methods.

FIG. 5, numeral 500, is a flow chart of a second embodiment of steps in accordance with the method of the present invention. The method synchronizes an encoder and decoder of a communication network upon detecting an error. The method includes, for units of encoded data, the steps of: 1) adding to each unit of encoded data, error detection information based on a predetermined combination of units of encoded data to provide error detect units (502); 2) transmitting said error detect units across the communication network (504); 3) receiving the error detect units (506); 4) detecting error(s) utilizing the error detection information (508), and 5) synchronizing the encoder and decoder upon detecting error(s) (510). The predetermined combination of units of encoded data may be selected, for example, to be a present unit of encoded data and a preselected number of prior units of encoded data.

As described for FIG. 3, the units of encoded data may be selected to be frames of asynchronous transfer mode (ATM) cells and the frames of ATM cells may be transmitted across an ATM communication network.

The error detection information typically is a code sequence added to said unit of encoded data subsequent to encoding the data wherein the code sequence is one of: a cyclic redundancy code (CRC), and a code sequence other than a CRC wherein the code sequence is calculated from the encoded data in accordance with a predetermined scheme.

Further description of particularities of the method of FIG. 6 follows the description of FIG. 3.

Although exemplary embodiments are described above, it will be obvious to those skilled in the art that many alterations and modifications may be made without departing from the invention. Accordingly, it is intended that all such alterations and modifications be included within the scope of the invention as defined in the appended claims.

## Claims

1. A method of communicating information from a source to a destination across a communication network, said method comprising the steps of:
encoding information into a sequence of units of encoded data;
generating an error detection information unit that is indicative of the encoded data unit and at least one previous unit;
combining the error detection information unit with a corresponding encoded data unit to form a transmittable unit;
transmitting the transmittable unit across the network from the source to the destination;
receiving a transmittable unit and stripping the error detection information unit therefrom; the method **characterised by** the steps of:
detecting errors in the stripped error detection information unit to detect, before decoding, if the received transmittable unit is erroneous or received out of sequence; and
if the detecting step detects that the received transmittable unit is erroneous or received out of sequence, re-synchronizing the encoding technique with the decoding technique.

2. The method of claim 1 wherein the encoding technique encodes data according to B-ISDN ATM Adaptation Layer 5 of CCIT recommendation I.363.

3. The method of claim 1 wherein the re-synchronizing step includes the steps of
the destination sending reset information to the source when the detecting step detects that the received transmittable unit is erroneous or received out of sequence;
the source responding to the reset information by resetting the encoding technique and sending a reset acknowledgment to the destination; and
the destination responding to the reset acknowledgment by resetting the decoding technique.

4. The method of claim 3 further comprising the steps of
the destination setting a timer when sending reset information;
if the timer expires before the destination receives the reset acknowledgment, the destination resending reset information.

5. The method of claim 1 wherein the re-synchronizing step includes the steps of
the destination sending reset information to the source when the detecting step detects that the received transmittable unit is erroneous or received out of sequence;
the source responding to the reset information by resetting the encoding technique;
the destination receiving subsequent transmittable units and stripping the error detection information units therefrom;
detecting errors in the stripped error detection information units to detect if the received transmittable unit is erroneous or received out of sequence; and
upon detecting that a received transmittable unit is not erroneous or received out of sequence, decoding a subsequent encoded data unit within the received transmittable unit according to the decoding technique.

6. The method of claim 1 wherein an error detection information unit is generated by using a cyclic redundancy code (CRC) seeded by a CRC of a previous error detection information unit.

7. The method of claim 6 wherein an error detection information unit is generated by maintaining a sequence count of transmittable units transmitted and by concatenating the sequence count to the CRC to form the error detection information unit.

8. The method of claim 6 wherein an error information unit is generated by maintaining a sequence count of transmittable units transmitted and by adding the sequence count to the CRC to form the error detection information unit.

9. A system for synchronizing an encoder of an encoder error synchronizer and a decoder of a decoder error synchronizer upon detection of error(s) in transmission of units of encoded data across a communication network, said system comprising:
an encoder error synchronizer, operably coupled to receive data and a reset request from the decoder error synchronizer, for generating an error detection information unit that is indicative of an encoded data unit and at least one previous unit, combining the error detection information unit with a corresponding encoded data unit to form a transmittable unit for transmitting and for, upon receiving the reset request, resetting the encoder,
transmitting means for transmitting the transmittable unit across the network from the source to the destination,
receiving means for receiving said transmittable unit and stripping the error detection information unit therefrom;
said system being **characterized in that** it comprises
a decoder error synchronizer, operably coupled to receive the transmittable unit, detecting error(s) in the stripped, error detection information unit to detect, before decoding, if the received transmittable unit is erroneous or received out of sequence, and, upon detecting error(s), sending a reset request to the encoder error synchronizer.

## Patentansprüche

1. Verfahren zum Kommunizieren von Informationen von einer Quelle zu einem Ziel, über ein Kommunikationsnetzwerk, wobei das Verfahren die folgenden Schritte umfasst:
Kodieren von Informationen in eine Sequenz von Einheiten aus kodierten Daten;
Erzeugen einer Fehlerdetektionsinformationeneinheit, die die kodierte Dateneinheit und zumindest eine vorhergehende Einheit betrifft;
Kombinieren der Fehlerdetektionsinformationeneinheit mit einer entsprechenden kodierten Dateneinheit, um eine übertragbare Einheit zu bilden;
Übertragen der übertragbaren Einheit über das Netzwerk, von der Quelle zu dem Ziel;
Empfangen einer übertragbaren Einheit und Abtrennen der Fehlerdetektionsinformationeneinheit von dieser;
wobei das Verfahren durch die folgenden Schritte **gekennzeichnet** ist:
Detektieren von Fehlern in der abgetrennten Fehlerdetektionsinformationeneinheit, um vor dem Dekodieren zu detektieren, wenn die empfangene übertragbare Einheit fehlerhaft ist oder außerhalb der Sequenz empfangen wurde; und
wenn der Detektionsschritt detektiert, dass die empfangene übertragbare Einheit fehlerhaft ist oder außerhalb der Sequenz empfangen wurde, Re-Synchronisieren der Kodiertechnik mit der Dekodiertechnik.

2. Verfahren nach Anspruch 1, bei dem die Kodiertechnik Daten entsprechend der B-ISDN ATM-Adaptionsschicht 5 der CCIT-Empfehlung I.363 kodiert.

3. Verfahren nach Anspruch 1, bei dem der Re-Synchronisierungsschritt die folgenden Schritte umfasst:
das Ziel sendet Zurücksetzinformationen zu der Quelle, wenn der Detektionsschritt detektiert, dass die empfangene übertragbare Einheit fehlerhaft ist oder außerhalb der Sequenz empfangen wurde;
die Quelle antwortet auf die Zurücksetzinformationen durch das Zurücksetzen der Kodiertechnik und das Senden einer Zurücksetzbestätigung zu dem Ziel; und
das Ziel antwortet auf die Zurücksetzbestätigung durch das Zurücksetzen der Dekodiertechnik.

4. Verfahren nach Anspruch 3, das weiterhin die folgenden Schritte umfasst:
das Ziel stellt einen Timer ein, wenn es die Zurücksetzinformationen sendet;
wenn der Timer abläuft bevor das Ziel die Zurücksetzbestätigung empfängt, sendet das Ziel erneut Zurücksetzinformationen.

5. Verfahren nach Anspruch 1, bei dem der Re-Synchronisierungsschritt die folgenden Schritte umfasst:
das Ziel sendet Zurücksetzinformationen zu der Quelle, wenn der Detektionsschritt detektiert, dass die empfangene übertragbare Einheit fehlerhaft ist oder außerhalb der Sequenz empfangen wurde;
die Quelle antwortet auf die Zurücksetzinformationen durch das Zurücksetzen der Kodiertechnik;
das Ziel empfängt nachfolgende übertragbare Einheiten und trennt die Fehlerdetektionsinformationeneinheiten von diesen ab;
Fehler in den abgetrennten Fehlerdetektionsinformationeneinheiten werden detektiert, um zu detektieren, wenn die empfangene übertragbare Einheit fehlerhaft ist oder außerhalb der Sequenz empfangen wurde; und
beim Detektieren, dass eine empfangene übertragbare Einheit fehlerhaft ist oder außerhalb der Sequenz empfangen wurde, Dekodieren einer nachfolgenden kodierten Dateneinheit innerhalb der empfangenen übertragbaren Einheit entsprechend der Dekodiertechnik.

6. Verfahren nach Anspruch 1, bei dem eine Fehlerdetektionsinformationeneinheit erzeugt wird, indem ein CRC (CRC = Cyclic Redundancy Code / zyklischer Block- beziehungsweise Redundanzcode) verwendet wird, der von einem CRC einer vorhergehenden Fehlerdetektionsinformationeneinheit ausgelöst wurde beziehungsweise stammt.

7. Verfahren nach Anspruch 6, bei dem eine Fehlerdetektionsinformationeneinheit erzeugt wird, indem eine Sequenzzählung von übertragenen übertragbaren Einheiten aufrechterhalten wird und indem die Sequenzzählung mit dem CRC verknüpft wird, um die Fehlerdetektionsinformationeneinheit zu bilden.

8. Verfahren nach Anspruch 6, bei dem eine Fehlerinformationeneinheit erzeugt wird, indem eine Sequenzzählung von übertragenen übertragbaren Einheiten aufrechterhalten wird und indem die Sequenzzählung zu dem CRC addiert wird, um die Fehlerdetektionsinformationeneinheit zu bilden.

9. System zum Synchronisieren eines Kodierers eines Kodiererfehlersynchronisierers und eines Dekodierers eines Dekodiererfehlersynchronisierers bei der Detektion von Fehler(n) in der Übertragung von Einheiten von kodierten Daten über ein Kommunikationsnetzwerk, wobei das System aufweist:
einen Kodiererfehlersynchronisierer, der betriebsfähig gekoppelt ist, um Daten und eine Zurücksetzanforderung von dem Dekodiererfehlersynchronisierer zu empfangen, um eine Fehlerdetektionsinformationeneinheit zu erzeugen, die eine kodierte Dateneinheit und zumindest eine vorhergehende Einheit betrifft, um die Fehlerdetektionsinformationeneinheit mit einer entsprechenden kodierten Dateneinheit zu kombinieren, um eine übertragbare Einheit zum Übertragen zu bilden, und um, beim Empfang der Zurücksetzanforderung, den Kodierer zurückzusetzen,
Übertragungsmittel, zum Übertragen der übertragbaren Einheit über das Netzwerk, von der Quelle zum Ziel,
Empfangsmittel zum Empfangen der übertragbaren Einheit und zum Abtrennen der Fehlerdetektionsinformationeneinheit von dieser,
wobei das System **dadurch gekennzeichnet ist, dass** es aufweist:
einen Dekodiererfehlersynchronisierer, der betriebsfähig gekoppelt ist, um die übertragbare Einheit zu empfangen, um Fehler in der abgetrennten Fehlerdetektionsinformationeneinheit zu detektieren, um vor der Dekodierung zu detektieren, wenn die empfangene übertragbare Einheit fehlerhaft ist oder außerhalb der Sequenz empfangen wurde, und um, bei der Detektion von Fehler(n), eine Zurücksetzanforderung zu dem Kodiererfehlersynchronisierer zu senden.

## Revendications

1. Procédé de communication d'informations entre une source et une destination sur un réseau de communication, ledit procédé comprenant les étapes de :
codage des informations en une séquence d'unités de données codées ;
génération d'une unité d'informations de détection d'erreur qui indique l'unité de données codées et au moins une unité précédente,
combinaison de l'unité d'informations de détection d'erreur avec une unité de données codées correspondante, pour former une unité transmissible ;
transmission de l'unité transmissible sur le réseau, entre la source et la destination,
réception de l'unité transmissible et extraction de l'unité d'informations de détection d'erreur de celle-ci ;
le procédé étant **caractérisé par** les étapes de :
détection d'erreurs dans l'unité d'informations de détection d'erreur extraite pour détecter, avant le décodage, si l'unité transmissible reçue est erronée ou reçue en dehors de la séquence ; et
si l'étape de détection détecte que l'unité transmissible reçue est erronée ou reçue en dehors de la séquence, resynchronisation de la technique de codage avec la technique de décodage.

2. Procédé selon la revendication 1, dans lequel la technique de codage code les données dans une Couche d'Adaptation 5 ATM (AAL5) du réseau RNIS à large bande (B-ISDN) de la recommandation CCITT 1.363.

3. Procédé selon la revendication 1, dans lequel l'étape de resynchronisation comporte les étapes de :
envoi à la source, par la destination, des informations de remise à zéro lorsque l'étape de détection détecte que l'unité transmissible reçue est erronée ou reçue en dehors de la séquence ;
réponse de la source aux informations de remise à zéro en remettant à zéro la technique de codage et en envoyant à la destination un accusé de réception de remise à zéro ; et
réponse de la destination à l'accusé de réception de la remise à zéro en remettant à zéro la technique de décodage.

4. Procédé selon la revendication 3 comprenant en outre les étapes de
remise à zéro, par la destination, d'une minuterie au moment de l'envoi des informations de remise à zéro ;
si le temps de la minuterie arrive à expiration avant que la destination reçoive l'accusé de réception de remise à zéro, renvoi, par la destination, des informations de remise à zéro.

5. Procédé selon la revendication 1, dans lequel l'étape de resynchronisation comporte les étapes de :
envoi à la source, par la destination, des informations de remise à zéro lorsque l'étape de détection détecte que l'unité transmissible reçue est erronée ou reçue en dehors de la séquence ;
réponse de la source aux informations de remise à zéro en remettant à zéro la technique de codage ;
réception, par la destination, des unités transmissibles subséquentes et extraction des unités d'informations de détection d'erreur de celles-ci;
détection d'erreurs dans les unités d'informations de détection d'erreur extraites pour détecter si l'unité transmissible reçue est erronée ou reçue en dehors de la séquence ; et
au moment de la détection qu'une unité transmissible reçue n'est pas erronée ou reçue en dehors de la séquence, décodage d'une unité de données codées subséquentes à l'intérieur de l'unité transmissible reçue selon la technique de décodage.

6. Procédé selon la revendication 1, dans lequel une unité d'informations de détection d'erreur est générée en utilisant un Contrôle par Redondance Cyclique (CRC), ensemencé par un CRC d'une unité d'informations de détection d'erreur précédente.

7. Procédé selon la revendication 6, dans lequel une unité d'informations de détection d'erreur est générée en conservant un compte de séquences d'unités transmissibles transmises et en concaténant le compte de séquences au CRC pour former l'unité d'informations de détection d'erreur.

8. Procédé selon la revendication 6, dans lequel une unité d'informations [de détection] d'erreur est générée en conservant un compte de séquences d'unités transmissibles transmises et en ajoutant le compte de séquences au CRC pour former l'unité d'informations de détection d'erreur.

9. Système de synchronisation d'un codeur d'un synchroniseur d'erreur de codeur et d'un décodeur d'un synchroniseur d'erreur de décodeur au moment de la détection d'une erreur ou d'erreurs lors de la transmission d'unités de données codées sur un réseau de communication, ledit système comprenant :
un synchroniseur d'erreur de codeur couplé, en fonctionnement, pour recevoir les données et une demande de remise à zéro provenant du synchroniseur d'erreur de décodeur, pour générer une unité d'informations de détection d'erreur qui indique une unité de données codées et au moins une unité précédente, combiner l'unité d'informations de détection d'erreur avec une unité de données codées correspondante afin de former une unité transmissible à transmettre, et pour remettre le codeur à zéro, au moment de la réception de la demande de remise à zéro ,
un moyen de transmission pour transmettre l'unité transmissible sur le réseau entre la source et la destination ,
un moyen de réception pour recevoir ladite unité transmissible et extraire l'unité d'informations de détection d'erreur de celle-ci ;
ledit système étant **caractérisé en ce qu'**il comprend :
un synchroniseur d'erreur de décodeur couplé, en fonctionnement, pour recevoir l'unité transmissible, en détectant l'erreur ou les erreurs dans l'unité d'informations de détection d'erreur extraite pour détecter, avant le décodage, si l'unité transmissible reçue est erronée ou reçue en dehors de la séquence, et au moment de la détection d'une erreur ou d'erreurs, pour envoyer une demande de remise à zéro au synchroniseur d'erreur de codeur.
